# EUROPÄISCHE PATENTANMELDUNG

(11) **EP 0 985 840 A2**
(43) Veröffentlichungstag der Anmeldung: **15.03.2000**
(21) Anmeldenummer: 99114198.7
(22) Anmeldetag: 23.07.1999
(51) Int. Cl.: F16D 41/10

(54) **Freilaufkupplung**

(30) Priorität: 10.08.1998 DE 19836019
(71) Anmelder: Mannesmann VDO Aktiengesellschaft, 60388 Frankfurt am Main (DE)
(72) Erfinder: Bachnak, Nouhad, 60326 Frankfurt (DE)
(74) Vertreter: Rassler, Andrea, Dipl.-Phys.

(57) **Zusammenfassung**

Bekannte Freilaufkupplungen sind richtungsbetätigte Kupplungen, die in einer Relativdrehrichtung beispielsweise durch Reibschluß eine Mitnahme zwischen einer Welle (12) und einer Nabe (16) ermöglichen. Bisweilen ist es gewünscht, einerseits einen Freilauf in beiden Richtungen zu ermöglichen und andererseits, beispielsweise bei der Zuschaltung eines Nebenantriebs, einen Reibschluß in wahlweise einer Relativdrehrichtung zu erlangen. Erreicht wird dies dadurch, daß die Klemmelemente (28) in der Ruhelage mit der Nabe (16) in Kraftschluß stehen und mit einer Kontaktfläche (36) mit einem feststehenden Element (18) zusammenwirken. Erst mit Beginn einer Drehbewegung der Nabe (16) ist ein Verklemmen der Klemmelemente (28) in einer ersten oder einer entgegengesetzt wirkenden zweiten Sperrstellung möglich. Die Freikupplung (10) kann beispielsweise zur Ankopplung eines elektrischen Servomotors an eine Lenksäule eines Kraftfahrzeuges verwendet werden.

## Beschreibung

Die Erfindung befaßt sich mit einer Freilaufkupplung mit einer Welle, einer Nabe und zwischen diesen angeordneten Klemmelementen, die zwischen einer Ruhelage, in welcher die Welle und die Nabe frei zueinander drehbar sind, und einer Sperrstellung beweglich sind, in welcher sie einen Reibschluß zwischen Welle und Nabe in einer ersten Relativdrehrichtung herstellen.

Reibschlüssige Freilaufkupplungen stellen richtungsbetätigte Kupplungen dar, die mit radialer oder axialer Kraftübertragung arbeiten können. Man unterscheidet zwischen Freiläufen mit zylindrischen Klemmkörpern, die zwischen einer zylindrischen und einer mit Klemmflächen versehenen Klemmbahn aufgenommen sind, die an der Welle oder der Nabe ausgebildet sein kann, und Freiläufen mit Klemmkörpern, die zwischen zylindrischen Klemmbahnen angeordnet sind und aufgrund ihrer Geometrie bei einer bestimmten Relativdrehrichtung zwischen diesen Bahnen verklemmbar sind. Um eine sichere, sofortige Mitnahme in der Sperrichtung sicherzustellen, werden Freiläufe meist mit einer Anfederung der Klemmkörper versehen, die diese gegen die Reibfläche vorbelasten.

Derartige Freilaufkupplungen werden unter anderem als Rücklaufsperren, als Überholkupplungen in Zweimotorenantrieben und bei Fahrradnaben verwendet.

Bei einigen Anwendungsfällen ist es jedoch nötig, daß die Sperrung beziehungsweise der Leerlauf nicht ausschließlich von der Drehrichtung abhängig ist, sondern in erster Linie davon, welches der Teile sich dreht. So kann es bei der Ankopplung eines Hilfantriebes beispielsweise erwünscht sein, daß dieser grundsätzlich völlig vom Hauptantrieb entkoppelt ist und erst nach seinem Zuschalten ein Reibschluß in beiden Drehrichtungen möglich sein soll. Eine Rückkehr in die Leerlaufstellung soll nach dem Abschalten des Hilfsantriebs erfolgen.

Derartige Anwendungsfälle lassen sich zwar auch mit Hilfe von zwei Überholkupplungen mit entgegengesetzten Leerlauf- beziehungsweise Sperrichtungen verwirklichen, die je nach Drehrichtung abwechselnd eingesetzt werden. Hierzu ist jedoch eine Fremdbetätigung erforderlich, die einen hohen Aufwand erfordert und beispielsweise im Falle schnell und oft wechselnder Drehrichtungen den Einsatz einer elektromagnetischen Kupplung notwendig macht, die erhebliche Kosten verursacht, Schaltgeräusche nach sich zieht und einen nicht unerheblichen Energieverbrauch hat.

Die Aufgabe der Erfindung besteht darin, eine Freilaufkupplung zu schaffen, die das selbsttätige und rein mechanische An- und Abkoppeln eines Hilfsantriebes in beiden Drehrichtungen ermöglicht.

Erfindungsgemäß wird die Aufgabe durch eine Freilaufkupplung der eingangs beschriebenen Art gelöst, bei welcher die Klemmelemente in der Ruhelage entweder mit der Welle oder der Nabe in Reib- oder Formschluß stehen und jeweils eine Kontaktfläche besitzen, die mit einem feststehenden Element zusammenwirkt, so daß infolge eines Verdrehens der Welle beziehungsweise der Nabe in Bezug auf das feststehende Element in Abhängigkeit von der Drehrichtung die Klemmelemente in die erste oder in eine zweite Sperrstellung gelangen, in welcher sie einen Reibschluß zwischen Welle und Nabe in der zweiten Relativdrehrichtung herstellen.

Die erfindungsgemäße Freilaufkupplung erlaubt es der Welle beziehungsweise der Nabe in der Ruhelage der Klemmelemente in beiden Drehrichtungen frei zu rotieren, ohne das andere Element mitzunehmen. Hierin unterscheidet sie sich von herkömmlichen Freilaufkupplungen, bei denen im Gegenteil Maßnahmen getroffen werden, um bei einer bestimmten Relativdrehrichtung die Klemmelemente möglichst rasch und sicher in ihre Sperrstellung zu bringen.

Ein weiterer Unterschied der erfindungsgemäßen Freilaufkupplung zu herkömmlichen Freilaufkupplungen besteht auch darin, daß die Klemmelemente aus ihrer Ruhelage in beiden Bewegungsrichtungen in Sperrstellungen gelangen können, die einen Reibschluß in einer ersten beziehungsweise der zweiten Relativdrehrichtung erzeugen. Grundsätzlich kann das Erreichen der Sperrfunktion mit den Mitteln bekannter Freilaufkupplungen erreicht werden, das heißt mit sternförmigen Klemmfläche bei zylindrischen Klemmelementen oder bei zylindrischen Klemmflächen mit entsprechend ausgeformten Klemmelementen. Aufgrund der zwischen den beiden Sperrstellungen vorgesehen Ruhelage der Klemmelemente gelangen diese bei einem Aufheben des Reibschlusses durch eine entgegengesetzte Relativdrehung zwischen Welle und Nabe nicht in die zweite Sperrstellung sondern in die Ruhelage, in welcher der Reibschluß zwischen Welle und Nabe zunächst unterbrochen wird und ein erneuter Reibschluß erst durch Wiederanlaufen des in der Ruhelage mit den Klemmelementen in Kontakt stehenden Elementens erfolgen kann.

Diese Zuschaltfunktion, die einen Reibschluß der Freilaufkupplung erst nach Drehbeginn dieses Elements zuläßt, wird durch das feststehende Element möglich, an dem sich die Klemmelemente in der Ruhelage abstützen.

Die erfindungsgemäß Freilaufkupplung kann bei den eingangs genannten Anwendungsbeispielen bei gleicher Funktionssicherheit die ansonsten notwendigen komplexen Anordnungen aus zwei Freilaufkupplungen mit zusätzlichen elektromagnetischen Schaltkupplungen ersetzen. Dabei wird beispielsweise die in der Ruhelage des Klemmelements frei drehbare Welle mit einem Hauptantrieb und die Nabe mit einem zuschaltbaren Nebenantrieb gekoppelt, der den Hauptantrieb beim Zuschalten in beiden Drehrichtungen überholt, wie dies bei einem Zweimotorenantrieb erwünscht sein kann.

Bei einem weiteren Anwendungsbeispiel ist die drehbare Welle mit der Lenksäule eines Kraftfahrzeuges als Hauptantrieb und die Nabe mit einem Elektromotor gekoppelt, der oberhalb bestimmter auftretender Lenkkräfte beziehungsweise Lenkmomente in der Lenksäule zuschaltbar ist.

Bei dieser Verwendung der Freilaufkupplung in einer elektromotorischen Lenkhilfe bestehen die Vorteile gegenüber einer permanenten Ankopplung des Elektromotors an die Lenksäule darin, daß der Fahrer nicht das Reibrastmoment des Etektromotors spürt, was den Lenkkomfort beeinträchtigen würde, und das Rückstellmoment der Fahrzeugräder nicht durch die durch den Elektromotor und sein Getriebe verursachten Reibmomente verringert wird, was unter Umständen dazu führen kann, daß die Lenkung nicht mehr automatisch vollständig in die Mittellage zurückstellt.

Bei einer ersten Variante der erfindungsgemäßen Freilaufkupplung ist vorgesehen, daß die Klemmelemente um jeweils eine Schwenkachse an der Nabe drehbar gelagert sind. Die Anlenkung der Klemmelemente an der Nabe, die gleichzeitig den Formschluß zwischen Klemmelementen und Nabe darstellt, sorgt für eine definierte Verlagerung der Klemmelemente, sobald die Nabe beginnt, sich zu drehen.

Um einen sicheren Kontakt der Kontaktflächen des Klemmelements mit dem feststehenden Element zu gewährleisten, sind die Klemmelemente in der Ruhelage vorzugsweise radial nach innen gegen das feststehende Element vorbelastet, beispielsweise durch eine federnd gelagerte Schwenkachse. Solange die Nabe bei dieser Variante stillsteht, kann sich die Welle in beiden Richtungen frei drehen.

Um nach dem Anlaufen der Nabe sicherzustellen, daß der Kontakt zwischen den Klemmelementen und dem feststehenden Element möglichst bald aufgehoben wird, und dadurch einen unnötigen Verschleiß der Kontaktflächen zu vermeiden, besteht die Kontaktfläche des Klemmelements vorzugsweise aus einer Außenfläche an einem sich über einen bestimmten Winkel erstreckenden Segmentbereich, die mit einer Umfangsfläche des feststehenden Elements zusammenwirkt. Der Reibschluß zwischen Klemmelement und Welle kann beispielsweise durch jeweils zwei Reibflächen an den Außenflanken zugehöriger Segmentbereiche erfolgen, die sich beidseitig über einen bestimmten Winkel an den Segmentbereich der Kontaktfläche anschließen und deren Radien so bemessen sind, daß beim Verschwenken der Klemmelemente in einer Richtung eine Reibfläche den Reibschluß mit einer zylindrischen Umfangsfläche der Welle in der entsprechenden Relativdrehrichtung herstellt. Infolge des Verschwenkens der Klemmelemente gelangt folglich die Kontaktfläche aus dem Kontaktbereich mit der Umfangsfläche des feststehenden Elements und eine Reibfläche in Kontakt mit der zylindrichen Umfangsfläche der Welle.

In weiterer bevorzugter Ausführungsform ist vorgesehen, daß die Radien der Reibflächen zu den außenliegenden Rändern der Segmentbereiche hin zunehmen. Diese Radiuserhöhung führt zu einem sicheren Verklemmen der Klemmelemente und vermeidet deren Überdrehen beziehungsweise einen Schlupf zwischen der Umfangsfläche der Welle und einer Reibfläche des Klemmelements.

Um ein sicheres, gleichmäßiges Erreichen der Sperrstellung aller Klemmelemente der Freilaufkupplung zu erreichen, überdeckt sich die Kontaktfläche in jeweils einem bestimmten Winkelbereich mit den sie flankierenden, axial versetzt zu ihr angeordneten Reibflächen. Damit sind in einem bestimmten Übergangsbereich sowohl die Kontaktfläche als auch eine Reibfläche in Reibkontakt mit den jeweils zugehörigen Umfangsflächen.

Bei einer alternativen Ausführungsform des erfindungsgemäßen Freilaufs bestehen die Klemmelemente aus jeweils einem Rollkörper, an dessen wenigstens einer Stirnseite ein Exzenterteil angebracht ist, das in der Ruhelage mit seiner bezüglich des Rollkörperzentrums außenliegenden Fläche an einer zylindrischen Umfangsfläche des feststehenden Elements anliegt.

Bei dieser Ausführungsform sind die Rollkörper frei beweglich und nicht in einem bestimmten Punkt an der Nabe angelenkt. Der Kontakt mit dem feststehenden Element, der für das Auslösen der Sperrfunktion notwendig ist, wird hierbei durch das Exzenterteil bewirkt, so daß sich der Rollkörper in der Ruhelage mit seiner Außenflanke an der Nabe und mit den Exzenterteilen auf dem feststehenden Element abstützt. Zu Unterstützung dieser Abstützung kann es zweckdienlich sein, daß das Exzenterteil in Bezug auf das Rollkörperzentrum axial nach außen elastisch gegen die Umfangsfläche des feststehenden Elements vorbelastet ist.

Das Erreichen der Sperrstellung erfolgt in Anlehnung an bekannte Freilaufkonstruktionen dadurch, daß die Rollkörper zylindrisch ausgebildet und in einer Bahn zwischen einer zylindrischen Umfangsfläche der Welle und einer im wesentlichen zylindrischen Innenfläche der Nabe aufgenommen sind, wobei die Innenfläche der Nabe im Bereich der Ruhelagen der Rollkörper Ausbauchungen aufweist.

Die Flanken der Ausbauchungen bilden dabei die Klemmflächen für die Rollkörper und ermöglichen Sperrstellungen in beiden Relativdrehrichtungen zwischen Welle und Nabe. Der Abstand zwischen der zylindrischen Umfangsfläche der Welle und der zylindrischen Innenfläche der Nabe zwischen den Ausbauchungen ist dabei selbstverständlich kleiner als der Durchmesser der Rollkörper.

Um einen sicheren und gleichzeitig weich ablaufenden Schaltvorgang der Kupplung beim Übergang in die Sperrstellung zu erreichen, folgen die Formen der Ausbauchungen der durch die äußere Formgebung des Rollkörpers und des Exzenterteils vorgegebenen Abrollbewegung der Rollkörper aus der Ruhelage auf dem feststehenden Element. Nach dem Durchlaufen eines Übergangsbereichs, in dem sowohl das Exzenterteil mit dem feststehenden Element als auch bereits die Umfangsfläche des Rollkörpers mit der Welle in Kontakt stehen, hebt das Exzenterteil vom feststehenden Element ab und die Rollkörper verklemmen zwischen Welle und Nabe.

Statt der Ausbauchungen in der Innenfläche der Nabe kann die Klemmwirkung auch über eine entsprechende Formgestaltung des Rollkörpers erfolgen, der sich aus der Ruhelage zwischen einer zylindrischen Außen- und Innenbahn verklemmen kann, die in diesem Fall beide zylindrisch sind.

Zur Erzielung eines gleichmäßigen Tragens zwischen Welle und Nabe sollten vorzugsweise wenigstens drei Klemmelemente über den Umfang verteilt angeordnet sein, bei Rollkörper zweckmäßigerweise mehr.

Um einen ausreichenden Anpreßdruck der Kontaktfläche an das feststehende Element zu erreichen, kann statt oder zusätzlich zu den zuvor erwähnten elastischen Mitteln der Kontaktbereich der Kontaktfläche des Klemmelements mit dem feststehenden Element radial elastisch ausgebidet sein. Dies läßt sich beispielsweise durch eine elastische Schicht auf der Umfangsfläche des feststehenden Elements oder federnde Elemente in diesem Bereich erzielen.

Um das Erreichen der Ruhelage der Klemmelemente und damit das vollständige Aufheben des Reibschlusses zwischen den Klemmelementen und der Welle beziehungsweise Nabe sicherzustellen, ist das Vorsehen von Federelementen von Vorteil, die die Klemmelemente in der Ruhelage halten. Die Bewegung der Klemmelemente in die Sperrstellung erfolgt somit gegen die den Schaltvorgang nicht behindernde Rückstellkraft der Federelemente.

Nachfolgend wird anhand der beigefügten Zeichnungen näher auf Ausführungsbeispiele der Erfindung eingegangen.

Es zeigen:
- Figur 1:: einen Längsschnitt einer Freilaufkupplung;
- Figur 2:: einen Querschnitt der Freilaufkupplung nach Figur 1;
- Figuren 3a, 3b und 3c:: ein Klemmelement der Freilaufkupplung nach Figur 1 und 2 in Ruhetage, Übergangslage und Sperrstellung;
- Figur 4:: einen Längsschnitt einer weiteren Ausführungsform einer Freilaufkupplung;
- Figur 5:: einen Querschnitt der Freilaufkupplung nach Figur 4;
- Figuren 6a, 6b und 6c:: einen Rollkörper der Freilaufkupplung nach Figuren 4 und 5 in Ruhelage, Übergangslage und Sperrstellung;
- Figur 7:: eine veranschaulichende Darstellung der Rollbewegung der Rollkörper;
- Figur 8:: eine Prinzipskizze eines ersten Anwendungsbeispiels einer Freilaufkupplung;
- Figur 9:: den Einsatz einer Freilaufkupplung bei einer elektromotorischen Lenkhilfe.

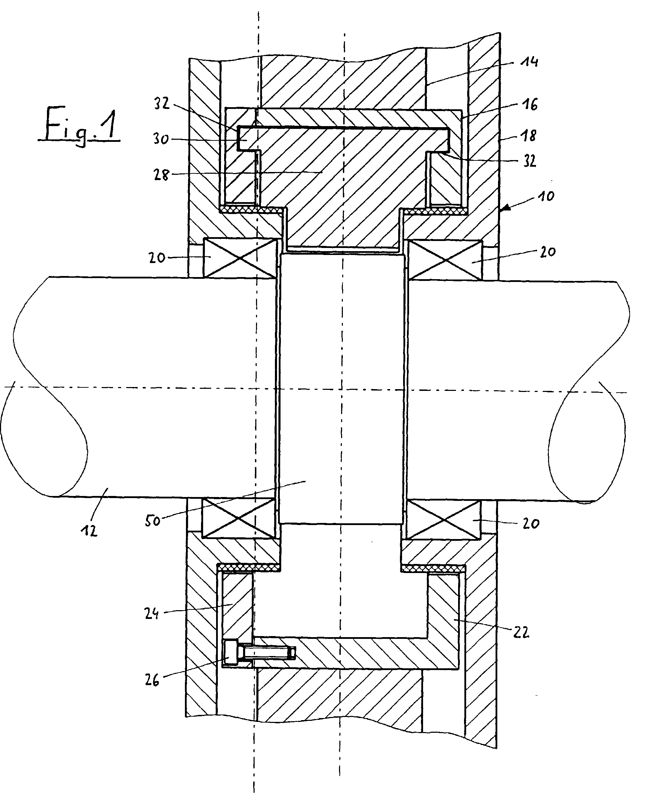

In den Figuren 1 und 2 ist eine Freilaufkupplung 10 dargestellt, die zwischen einer Welle 12 und einer mit einem Zahnrad 14 verbundenen Nabe 16 angeordnet ist. Ein Kupplungsgehäuse 18 ist als feststehendes Teil ausgebildet und beispielsweise an der Karosserie eines Kraftfahrzeug festgelegt.

Die Welle ist über zwei Kugel- oder Zylinderrollenlager 20 drehbar in dem Kupplungsgehäuse 18 gelagert. Zwischen der Nabe 16 und dem Kupplungsgehäuse 18 ist eine freie Drehbarkeit gegeben, beispielsweise durch zwischen der Nabe 16 und dem Kupplungsgehäuse 18 vorgesehene Lager (nicht gezeigt).

Die Nabe 16 besteht aus einem Nabentopf 22 und einem Nabendeckel 24, die mit Hilfe von Befestigungsschrauben 26 miteinander verschraubt sind. Zwischen dem Nabentopf 22 und dem Nabentopf 24 sind dabei Klemmelemente 28 aufgenommen, die über Zapfen 30 verfügen, die in entsprechenden Bohrungen 32 in dem Nabentopf 22 und dem Nabendeckel 24 aufgenommen sind und dadurch eine schwenkbare Lagerung der Klemmelemente 28 in der Nabe 16 bewirken.

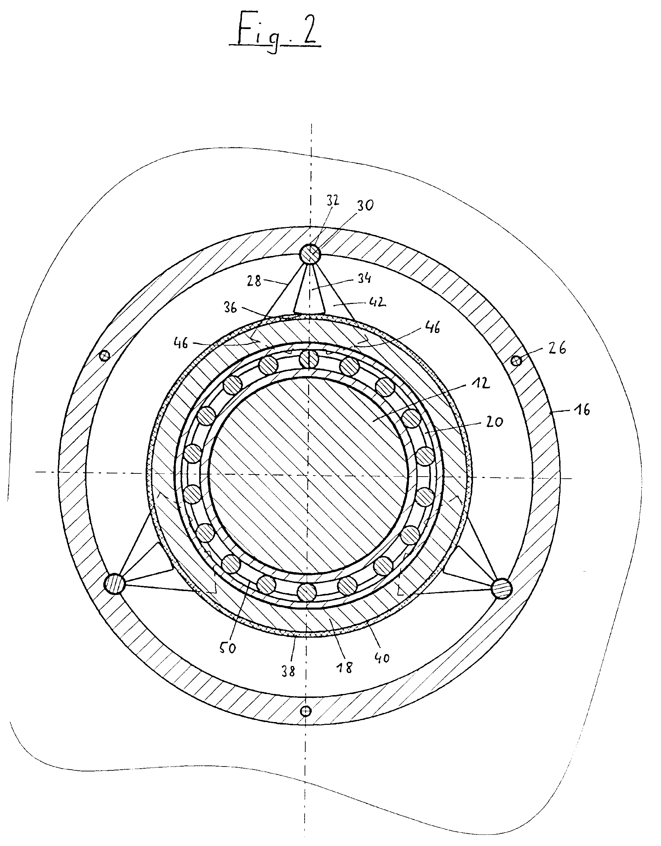

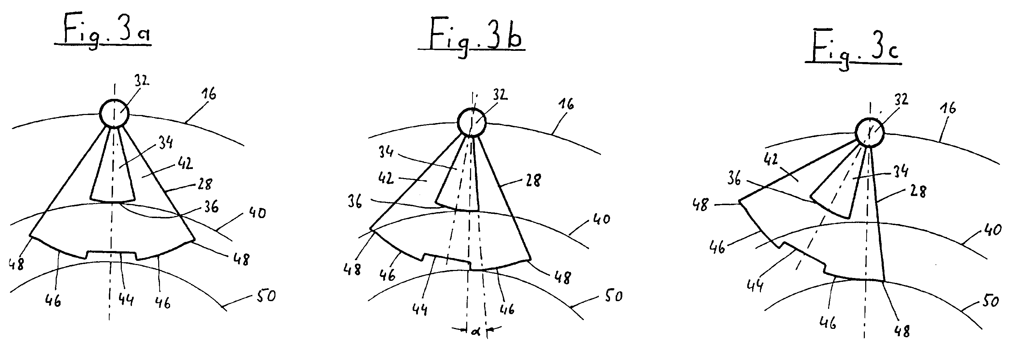

Die scheibensegmentförmigen Klemmkörper (siehe auch Figuren 2 und 3) besitzen einen ersten Segmentbereich 34, dessen auf dem Umfang liegende Kontaktfläche 36 mit einer elastischen Schicht 38, die auf einer Umfangsfläche 40 des Kupplungsgehäuses 18 aufgebracht ist, in der Mittellage der Klemmelemente 28 in Druckkontakt steht. Die Klemmelemente 28 verfügen weiterhin über einen Segmentbereich 42, der sich über einen größeren Winkelbereich und einen größeren Radius als der Segmentbereich 34 der Kontaktfläche 36 erstreckt. Die Außenfläche des Segmentbereichs 42 ist mittig über einen Winkelbereich, der geringfügig kleiner als der Winkelbereich des Segmentbereichs 34 ist, mit geringerem Radius ausgebildet, während beidseitig dieser Ausnehmung 44 Reibflächen 46 vorgesehen sind, deren Randbereiche 48 mit leicht ansteigenden Radien ausgebildet sind. Der Radius der Reibflächen 46 ist so gewählt, daß bei einem Verschwenken des Klemmelements 28 aus der Ruhelage ein Reibkontakt einer Reibfläche 46 mit einer zylindrischen Umfangsfläche 50 an der Welle 12 herstellbar ist.

Die Klemmelemente befinden sich gewöhnlich in einer Ruhelage (siehe Figur 3a) und gelangen durch ein Verdrehen der Nabe 16 über eine Übergangslage (siehe Figur 3b) in eine Sperrstellung (siehe Figur 3c), in welcher sie einen Reibschluß zwischen der Nabe 16 und der Welle 12 herstellen.

In der Ausgangs- oder Ruhelage (siehe Figur 3a) berührt das in der Nabe 16 schwenkbar gelagerte Klemmelement 28 mit seiner Kontaktfläche 36 die elastische Schicht 38 auf dem feststehenden Kupplungsgehäuse 18. Trotz dieser Berührung läßt die Schwenkbarkeit der Klemmelemente 28 eine relative Drehbewegung zwischen der Nabe 16 und dem Kupplungsgehäuse 18 zu. Zwischen der Nabe 16 und der Welle 12 bestehen in der Ruhelage in folge der zwischen den Reibflächen 46 vorgesehenen Ausnehmung 44 keine Berührungspunkte. Auf diese Weise kann die Welle 12 in beiden Drehrichtungen verdreht werden, ohne daß eine Mitnahme der Nabe 16 erfolgt.

Sobald die Nabe 16 beginnt, sich zu drehen, rollt das Klemmelement 28 mit der Kontaktfläche 36 auf der Umfangsfläche 40 des Kupplungsgehäuses 18 ab und gelangt in die in Figur 3b dargestellte Übergangslage, in welcher in Abhängigkeit von der Drehrichtung der Nabe 16 eine der Reibflächen 46 die Umfangsfläche 50 der Welle 12 berührt. Über einen bestimmten Drehwinkelbereich rollt das Klemmelement 28 gleichzeitig auf dem Kupplungsgehäuse 18 und der Welle 12 ab. Der Übergangsbereich stellt sicher, daß alle Klemmelemente 28 die Welle 12 berühren, so daß ein gleichmäßiges sanftes Einkuppeln erreicht wird.

Dreht sich die Nabe 16 weiter, gelangen die Klemmelemente 28 in die in Figur 3c dargestellte Sperrstellung. Zuvor hat sich die Kontaktfläche 36 von der elastischen Schicht 38 getrennt, so daß kein Reibschluß mehr zwischen Nabe und Kupplungsgehäuse 18 besteht. In der Sperrstellung bildet das Klemmelement 28 eine reibschlüssige Verbindung zwischen der Nabe 18 und der Welle 12, wobei die erhöhten Randbereiche 48 ein Überdrehen der Klemmelemente 28 und einen Schlupf zwischen der Welle 12 und der in Eingriff befindlichen Reibfläche 46 verhindern. Beim weiteren Drehen der Nabe 16 wird die Welle 12 mitgenommen.

Sobald die Drehzahl der Welle 12 höher wird als die der Nabe 16, findet ein Rollvorgang der Klemmelemente in die entgegengesetzte Richtung statt. Folglich rollt zunächst die den Reibschluß bildende Reibfläche 46 auf der Umfangsfläche 50 der Welle 12 und anschließend die Kontaktfläche 36 auf der Umfangsfläche 40 des Kupplungsgehäuses 18 ab, bis die Klemmelemente die in Figur 3a gezeigte Ruhelage erreicht haben. Federelemente (nicht gezeigt) können die Rückstellbewegung der Klemmelemente 28 zum sicheren Trennen der Freilaufkupplung 10 unterstützen.

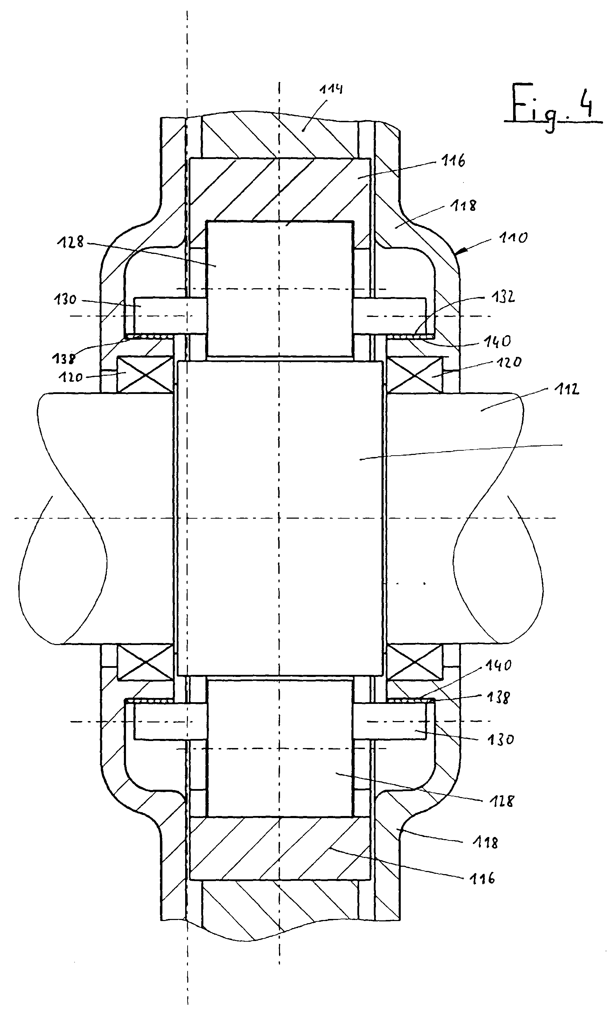

In den Figuren 4, 5, 6a, 6b, und 6c ist eine weitere Ausführungsform einer Freilaufkupplung 110 dargestellt. Auch bei dieser Ausführungsform ist die Freilaufkupplung 110 zwischen einer Welle 112 und einer mit einem Zahnrad 114 verbundenen Nabe 116 angeordnet. Die Welle 112 ist in einem feststehenden Kupplungsgehäuse 118, das beispielsweise an der Karosserie eines Kraftfahrzeuges festgelegt ist, über Kugel- oder Zylinderrollenlager 120 gelagert. Auch bei dieser Ausführungsform ist die freie Drehbarkeit der Nabe 116 in Bezug auf das Kupplungsgehäuse 118 gegeben.

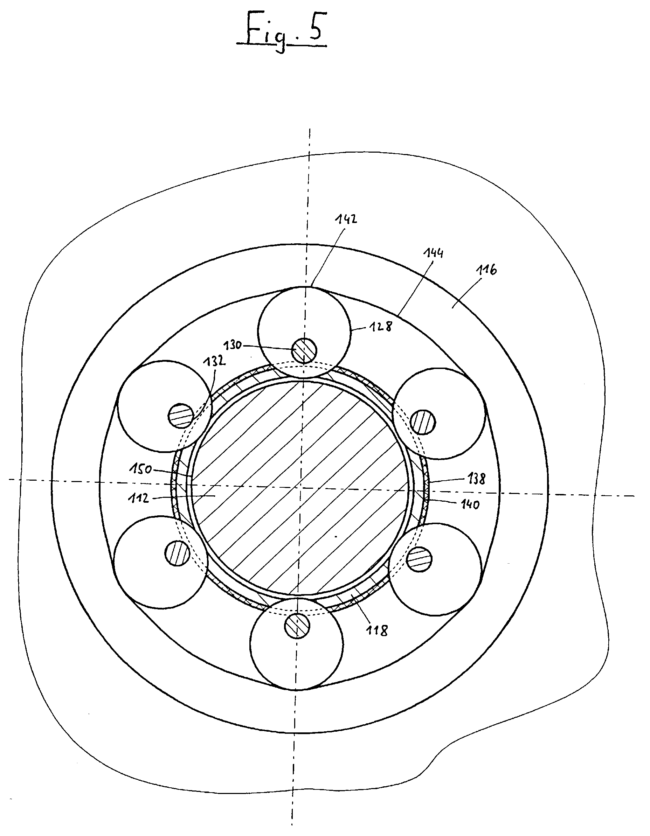

Die Klemmelemente bestehen bei dieser Variante jedoch aus zylindrischen Rollkörpern 128, an deren Stirnseiten Exzenterteile 130 angeformt sind, die einen zylindrischen Querschnitt kleineren Durchmessers haben. Der in Bezug auf die Mittelachse des Rollkörpers 128 radial außenliegende Bereich 132 des Exzenterteils 130 liegt in der Ruhelage unter leichtem Druck auf einer elastischen Schicht 138, die auf einer Umfangsfläche 140 an dem Kupplungsgehäuse 118 aufgebracht ist. Die Ruhelage der Rollkörper 128 ist auch in Figur 5 und Figur 6a dargestellt, wobei die Rollenkörper 128 in Ausbauchungen 142 in einer im übrigen hohlzylindrischen Innenfläche 144 anliegen.

Die Anlage der Außenbereiche 132 der Exzenterteile 130 läßt eine relative Drehbewegung der Rollkörper 128 zu, die ansonsten frei in der Bahn zwischen einer Umfangsfläche 150 auf der Welle und der Innenfläche 144 in der Nabe aufgenommen sind. In der Ruhelage (siehe Figur 6a) bestehen zwischen der Nabe 116 und der Welle 112 keine Berührungspunkte, da der Abstand vom Außenbereich 132 des Exzenterteils 130 zur Umfangsfläche des Rollkörpers 128 kleiner ist als die Differenz der Radien der Umfangsfläche 150 der Welle 112 und der Umfangsfläche 140 des Kupplungsgehäuses 118. Somit kann sich die Welle 112 in der Ruhelage in beiden Richtungen frei drehen, ohne daß eine Mitnahme der Nabe 116 erfolgt.

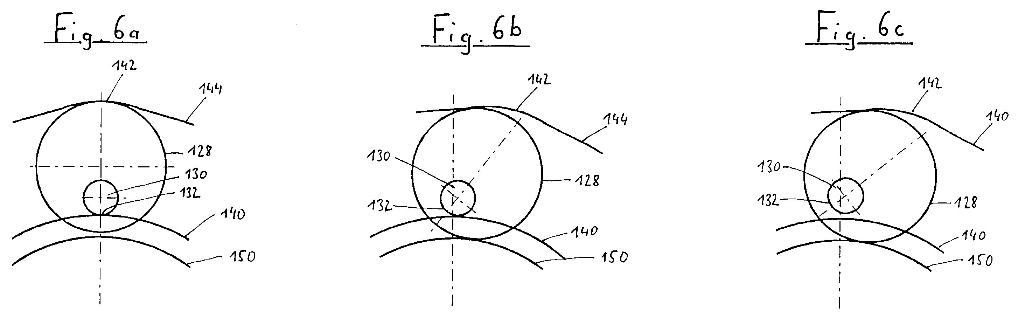

Beginnt nun die Nabe 116, sich zu drehen, rollen die Rollkörper 128 zwischen den Berührungspunkten des Exzenterteils 130 auf der Umfangsfläche 140 des Kupplungsgehäuses und den Berührungspunkten ihrer eigentlichen Umfangsfläche in der Ausbauchung 142 ab. Die Form der Ausbauchung 142 ist dabei so gewählt, daß das Exzenterteil 130 zunächst in Berührung mit der elastischen Schicht 138 bleibt, so daß gleichzeitig eine Annäherung der zwischen der Umfangsfläche der Rollkörper 128 an die Umfangsfläche 150 auf der Wette 112 erfolgt. In der Übergangslage (siehe Figur 6b) berührt das Exzenterteil 130 noch die elastische Schicht 138 und die Umfangsfläche des Rollkörpers 128 liegt bereits an der Umfangsfläche 150 auf der Welle 112 an.

Bei der weiteren Rollbewegung, die alleine zwischen der Innenfläche 144 der Nabe 16 und der Umfangsfläche 150 der Welle 112 erfolgt, gelangen die Rollkörper 128 in die in Figur 6c dargestellte Sperrstellung, in welcher die Exzenterteile 130 von der elastischen Schicht 138 abgehoben sind. Die Sperrwirkung wird dadurch erzielt, daß der Abstand zwischen der Innenfläche 144 und der Umfangsfläche 150 kleiner ist als der Durchmesser der Rollkörper 128. In der Sperrstellung kann folglich eine Mitnahme der Welle 112 durch die Nabe 116 erfolgen.

Wird die Drehzahl der Welle 112 höher als die der Nabe 116 findet auch bei dieser Ausführungform ein Rollvorgang der Rollkörper 128 in der entgegengesetzten Richtung statt, bis die Rollkörper 128 über den in Figur 6b dargestellten Übergangszustand wieder ihre Ruhelage gemäß Figur 6a einnehmen. Auch bei dieser Ausführungsform können Federelemente dafür sorgen, daß die Rollkörper 128 sicher in ihre Ruhelage zurückkehren.

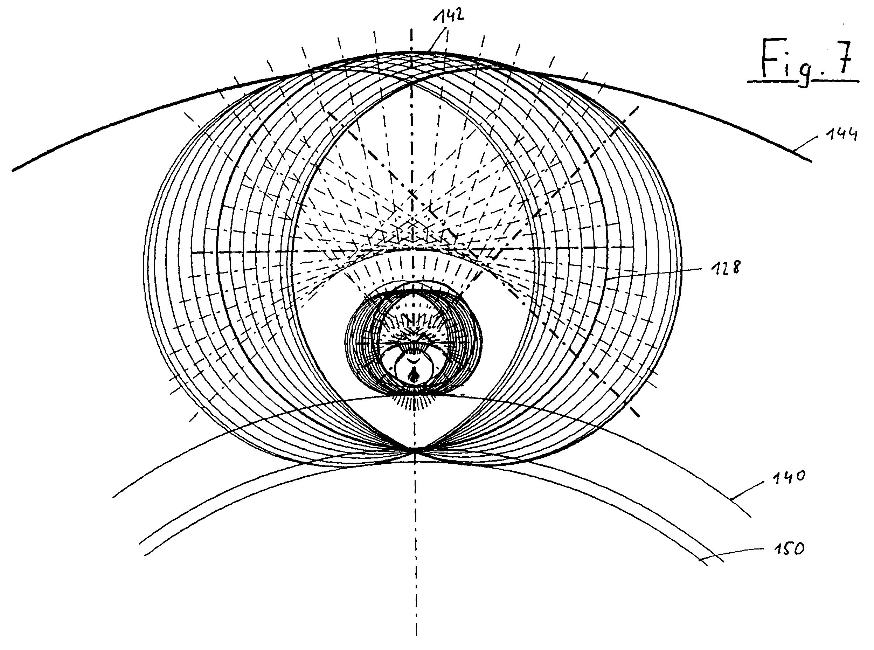

Die Rollbewegung des Rollkörpers 128 zwischen der Innenfläche 144, der Außenfläche 140 des Kupplungsgehäuses 118 und der Außenfläche 150 der Welle 112 wird durch die in Figur 7 dargestellten Übergangslagen deutlich.

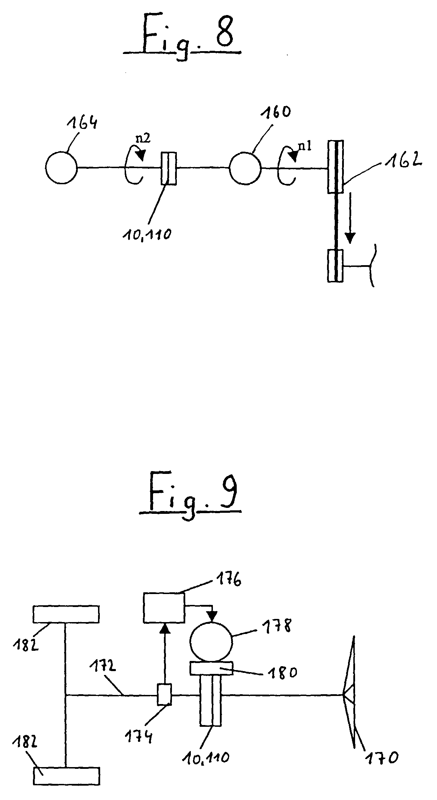

In Figur 8 ist ein erstes Anwendungsbeispiel einer Freilaufkupplung 10, 110 nach dem Funktionsprinzip eines der zuvor beschriebenen Ausführungsbeispiele dargestellt. Dabei treibt ein Hauptantrieb 160 beispielsweise ein Riemengetriebe 162 mit der Drehzahl n1 an und wird bei Bedarf durch einen Hilfsantriebsmotor 164 unterstützt, dessen Nenndrehzahl n2 größer als n1 ist. Die Überholkuppung 10, 110 stellt folglich den Reibschluß zwischen dem Hilfsantrieb 164 und dem Hauptantrieb 160 her, wenn der Hilfsantrieb 164 zugeschaltet wird. Nach dem Abschalten des Hilfsantriebes 164 kehren die Klemmelemente 28, 128 in die Ruhelagen zurück und der Hilfsantrieb 164 wird vom Hauptantrieb 160 abgekoppelt, so daß letzterer den Hilfsantrieb im Normalbetrieb nicht mitschleppen muß.

In Figur 9 ist ein weiteres Anwendungsbeispiel der Freilaufkupplung 10, 110 bei einer elektromotorischen Lenkhilfe dargestellt. Dabei stellt der Fahrer durch die eingeleiteten Lenkkräfte in das Lenkrad 170 und in die Lenksäule 172, die mit der Welle 12, 112 der Freilaufkupplung gekoppelt ist, den Hauptantrieb dar, wobei das vom Fahrer eingeleitete Drehmoment von einem Drehmomentsensor 174 erfaßt wird. Höhe und Richtung dieses Drehmoments werden in Form eine elektrischen Signals an eine Steuerelektronik 176 weitergeleitet, die ab einem bestimmten Schwellenwert einen elektrischen Antriebsmotor 178 in Abhängigkeit von der Höhe und Richtung des Drehmoments und gegebenenfalls der Geschwindigkeit des Fahrzeugs ansteuert. Der Elektromotor 178 ist über ein Getriebe 180 mit der Nabe 16, 116 der Freikupplung 10, 110 gekoppelt und fungiert als Hilfsantrieb zur Unterstützung des Fahrers.

Bei hoher Geschwindigkeit und kleinen Lenkbewegungen ist das vom Fahrer eingeleitete Drehmoment gering und eine Unterstützung der Lenkbewegung nicht erforderlich. Die Freilaufstellung der Freilaufkupplung 10, 110 sorgt dafür, daß der Fahrer das Reibrastmoment des Elektromotors nicht spürt und die Rückstellmomente der Fahrzeugräder 182 nicht durch die Reibmomente des Motors 178 und seines Getriebes 180 behindert werden. Dank der Freilaufkupplung 10, 110 ist eine Unterstützung der Lenkbewegung in beiden Drehrichtungen der Lenksäule 172 möglich.

## Patentansprüche

1. Freilaufkupplung mit einer Welle (12; 112), einer Nabe (16; 116) und zwischen diesen angeordneten Klemmelementen (28; 128), die zwischen einer Ruhelage, in welcher die Welle (12, 112) und die Nabe (16, 116) frei zueinander drehbar sind, und einer Sperrstellung beweglich sind, in welcher sie einen Reibschluß zwischen Welle (12; 112) und Nabe (16; 116) in einer ersten Relativdrehrichtung herstellen, dadurch gekennzeichnet, daß die Klemmelemente (28; 128) in der Ruhelage entweder mit der Welle (12; 112) oder der Nabe (16; 116) in Reib- oder Formschluß stehen und jeweils eine Kontaktfläche (36; 132) besitzen, die mit einem feststehenden Element (18, 38, 40; 118, 138, 140) zusammenwirkt, so daß infolge eines Verdrehens der Welle (12; 112) beziehungsweise der Nabe (16; 116) in Bezug auf das feststehende Element (18; 118) in Abhängigkeit von der Drehrichtung die Klemmelemente (28; 128) in die erste oder in eine zweite Sperrstellung gelangen, in welcher sie einen Reibschluß zwischen der Welle (12; 112) und der Nabe (16; 116) in der zweiten Relativdrehrichtung herstellen.

2. Freilaufkupplung nach Anspruch 1, dadurch gekennzeichnet, daß die Klemmelemente (28) um jeweils eine Schwenkachse an der Nabe (16) drehbar gelagert sind.

3. Freilaufkupplung nach Anspruch 2, dadurch gekennzeichnet, daß die Klemmelemente (28) in der Ruhelage radial nach innen elastisch gegen das feststehende Element (18, 38) vorbelastet sind.

4. Freilaufkupplung nach Anspruch 2 oder 3, dadurch gekennzeichnet, daß die Kontaktflächen (36) der Klemmelemente (28) aus einer Außenfläche an einem sich über einen bestimmten Winkel erstreckenden Segmentbereich (34) bestehen und mit einer Umfangsfläche (38, 40) des feststehenden Elements (18) zusammenwirken.

5. Freilaufkupplung nach einem der Ansprüche 2 bis 4, dadurch gekennzeichnet, daß die Klemmelemente (28) jeweils zwei Reibflächen (46) an den Außenflächen zugehöriger Segmentbereiche (42) besitzen, die sich beidseitig über einen bestimmten Winkel an den Segmentbereich (34) der Kontaktfläche (36) anschließen und deren Radien so bemessen sind, daß beim Verschwenken des Klemmelements (28) in einer Richtung eine Reibfläche (46) den Reibschluß mit einer zylindrischen Umfangsfläche (50) der Welle (12) in der entsprechenden Relativdrehrichtung herstellt.

6. Freilaufkupplung nach Anspruch 5, dadurch gekennzeichnet, daß die Radien der Reibflächen (46) zu den außenliegenden Rändern (48) der Segmentbereiche (42) hin zunehmen.

7. Freilaufkupplung nach Anspruch 5 oder 6, dadurch gekennzeichnet, daß sich die Kontaktfläche in jeweils einem bestimmten Winkelbereich mit den sie flankierenden, axial versetzt zu ihr angeordneten Reibflächen (46) überdeckt.

8. Freilaufkupplung nach einem der Ansprüche 5 bis 7, dadurch gekennzeichnet, daß der Abstand der Kontaktfläche (36) von der Schwenkachse kleiner als der Abstand der Reibflächen (46) von der Schwenkachse ist.

9. Freilaufkupplung nach Anspruch 1, dadurch gekennzeichnet, daß die Klemmelemente aus jeweils einen Rollkörper (128) bestehen, an dessen wenigstens einer Stirnwand ein Exzenterteil (130) angeformt ist, das in der Ruhelage mit seiner bezüglich des Rollkörperzentrums außenliegenden Fläche (132) an einer zylindrischen Umfangsfläche (138, 140) des feststehenden Elements (118) anliegt.

10. Freilaufkupplung nach Anspruch 9, dadurch gekennzeichnet, daß das Exzenterteil (130) in Bezug auf das Rollkörperzentrum radial nach außen elastisch gegen die Umfangsfläche (138, 140) vorbelastet ist.

11. Freilaufkupplung nach 9 oder 10, dadurch gekennzeichnet, daß die Rollkörper (128) zylindrisch ausgebildet und in einer Bahn zwischen einer zylindrischen Umfangsfläche (150) der Welle (112) und einer im wesentlichen zylindrischen Innenfläche (144) der Nabe (116) aufgenommen sind, wobei die Innenfläche (144) der Nabe (116) im Bereich der Ruhelagen der Rollkörper (128) Ausbauchungen (142) aufweist.

12. Freilaufkupplung nach Anspruch 11, dadurch gekennzeichnet, daß die Form der Ausbauchungen (142) der durch die äußere Formgebung des Rollkörpers (128) und Exzenterteils (130) vorgegebene Abrollbewegung der Rollkörper (128) aus der Ruhelage auf dem feststehenden Element (118) folgt.

13. Freilaufkupplung nach einem der vorhergehenden Ansprüche, dadurch gekennzeichnet, daß wenigstens drei Klemmelemente (28; 118) über den Umfang verteilt angeordnet sind.

14. Freilaufkupplung nach einem der vorhergehenden Ansprüche, dadurch gekennzeichnet, daß der Kontaktbereich der Kontaktflächen (36; 132) der Klemmelemente (28; 128) und dem feststehenden Element (118) radial elastisch ausgebildet ist.

15. Freilaufkupplung nach Anspruch 14, dadurch gekennzeichnet, daß das feststehende Element (18; 118) im Kontaktbereich mit einer elastischen Schicht (38; 138) oder federnden Elementen ausgebildet ist.

16. Freilaufkupplung nach einem der vorhergehenden Ansprüche, dadurch gekennzeichnet, daß Federelemente vorgesehen sind, die die Klemmelemente (28; 128) in der Ruhelage halten.

17. Freilaufkupplung nach einem der vorhergehenden Ansprüche, dadurch gekennzeichnet, daß die in der Ruhelage der Klemmelemente (28; 128) frei drehbare Welle (12; 112) mit einem Hauptantrieb (160; 172) und die Nabe (16; 116) mit einem zuschaltbaren Nebenantrieb (164; 174, 180) gekoppelt ist, der den Hauptantrieb (160; 172) beim Zuschalten in beiden Drehrichtungen überholt.

18. Freilaufkupplung nach Anspruch 17, dadurch gekennzeichnet, daß die drehbare Welle (12; 112) mit der Lenksäule (172) eines Kraftfahrzeuges als Hauptantrieb und die Nabe (16; 116) mit einem Elektromotor (178) gekoppelt ist, der oberhalb bestimmter auftretender Lenkkräfte beziehungsweise Lenkmomente in der Lenksäule (172) zuschaltbar ist.
